# EUROPÄISCHE PATENTSCHRIFT

(11) **EP 2 326 997 B1**
(45) Veröffentlichungstag und Bekanntmachung des Hinweises auf die Patenterteilung: **15.01.2020**
(21) Anmeldenummer: 09777619.9
(22) Anmeldetag: 04.08.2009
(51) Int. Cl.: G05B 23/02

(54) **VERFAHREN ZUM BETRIEB EINES INDUSTRIELLEN SYSTEMS**
METHOD FOR OPERATING AN INDUSTRIAL SYSTEM
PROCÉDÉ POUR FAIRE FONCTIONNER UN SYSTÈME INDUSTRIEL

(30) Priorität: 17.09.2008 DE 102008048552
(43) Veröffentlichungstag der Anmeldung: 01.06.2011
(73) Patentinhaber: KHS GmbH, 44143 Dortmund (DE)
(72) Erfinder: HERMANN, Thomas, 58640 Iserlohn (DE); BUCHKREMER, Wolfgang, 41515 Grevenbroich (DE)
(86) Internationale Anmeldenummer: PCT/EP2009/005613
(87) Internationale Veröffentlichungsnummer: WO 2010/031463

(56) Entgegenhaltungen:
- WO-A1-2005/109122
- WO-A2-2006/080366
- DE-A1- 10 129 567
- US-A1- 2005 149 216

## Beschreibung

### Technisches Gebiet

Die vorliegende Erfindung betrifft ein Verfahren zum Betrieb eines industriellen Systems, ein industrielles System zur Durchführung des erfindungsgemäßen Verfahrens und ein Computerprogramm mit Programmcodemitteln, um alle Schritte des erfindungsgemäßen Verfahrens auszuführen.

### Beschreibung des Standes der Technik

Industrielle Systeme im Sinne der Erfindung umfassen grundsätzlich alle denkbaren Bereiche des Maschinen- und Anlagenbaus. Insbesondere umfassen Sie Herstellungs- und Fertigungsanlagen sowie Anlagen des Sondermaschinenbaus, wie etwa Verpackungs- oder Abfüllanlagen, insbesondere zum Abfüllen von Getränken in Flaschen.

Im Folgenden wird beispielhaft lediglich auf Abfüllanlagen als industrielles System eingegangen, darüber hinaus ist die vorliegende Erfindung jedoch auch auf alle anderen Arten von industriellen Systemen anwendbar.

Industrielle Systeme, insbesondere Abfüllanlagen, sind in sogenannten Linien gruppiert, wobei jede Linie ein bestimmtes Endprodukt herstellt, beispielsweise eine mit einem bestimmten Getränk befüllte bestimmte Flaschengröße.

Innerhalb eines industriellen Systems können mehrere Linien vorgesehen sein, die parallel betrieben werden.

Jede Linie wiederum umfasst in der Regel mehrere Maschinen, wobei auf jeder Maschine ein bestimmter Arbeitsschritt auf dem Weg zur Herstellung des Endprodukts ausgeführt wird. Bei diesen Schritten kann es sich beispielsweise um das Anordnen, Waschen, Transportieren, Befüllen, Verschließen oder Etikettieren von Flaschen handeln.

Jede Maschine wiederum weist in der Regel mehrere Komponenten auf, die zusammenwirken, um den jeweiligen Arbeitsschritt der Maschine auszuführen.

Im Stand der Technik sind verschiedene Möglichkeiten bekannt, die Herstellung der Endprodukte zu überwachen und zu steuern. Dafür sind an jeder Maschine Bedieneinrichtungen vorgesehen, über die der Betriebszustand der jeweiligen Maschine überwacht und die Maschine gesteuert werden kann.

In der Regel ist daher für jede Maschine eine Bedienperson nötig, die den Betrieb der Maschine überwacht und Eingaben an die Maschinen vornimmt.

Ein zentrales Element bei der Überwachung bzw. dem Betrieb einer Maschine ist, auftretende Fehler schnellstmöglich zu erkennen und klassifizieren zu können. Da die Funktionsfähigkeit einer gesamten Linie nur dann gegeben ist, wenn sämtliche Maschinen der Linie arbeiten, bedeutet ein Anhalten nur einer einzigen Maschine, dass die gesamte Linie nicht mehr arbeiten kann.

Auch kann es bei kritischen Fehlern zu einer Beschädigung einer Maschine kommen.

Es wird somit gewünscht, auftretende Fehler in einer Maschine möglichst schnell erkennen, klassifizieren und beheben zu können.

Im Stand der Technik ist in der Regel vorgesehen, dass an jeder Maschine ein Warnelement, beispielsweise eine rundum leuchtende Lampe angebracht ist, die im Falle eines Fehlers Warnhinweise ausgibt. Eine an dieser Maschine oder in der Nähe befindliche Person hat dann zu der Maschine zu eilen, den Fehler zu klassifizieren und eine entsprechende Entscheidung zu treffen, wie weiter zu verfahren ist.

Hierbei entsteht jedoch der Nachteil, dass viele Bedienpersonen notwendig sind, um eine effiziente Überwachung und Steuerung einer und insbesondere mehrerer Linien bereitzustellen. Ansonsten kann dies dazu führen, dass aufgrund der häufig weiten zurückzulegenden Strecken innerhalb eines industriellen Systems viel Zeit vergeht, bevor überhaupt mit der Klassifizierung eines Fehlers begonnen werden kann. Des weiteren weisen die Bedienpersonen verschiedener Maschinen in der Regel unterschiedliche Qualifizierungen auf, so dass der Fall eintreten kann, dass eine Bedienperson einen Fehler zur klassifizieren hat, der nicht ihrer individuellen Qualifizierung entspricht.

Des weiteren findet keine Abstimmung darüber statt, welche Bedienperson sich eines auftretenden Fehlers anzunehmen hat. In der Regel begeben sich sämtliche Bedienpersonen, die einen Warnhinweis wahrnehmen zu der entsprechenden Maschine, so dass stets eine Überversorgung eintritt.

Selbst wenn sich nur eine Bedienperson zu einer entsprechenden fehlerhaften Maschine begibt und den Fehler klassifizieren kann, fehlen ihr häufig die entsprechenden Fähigkeiten und das entsprechende Werkzeug, um den Fehler zu beheben. Darüber hinaus fehlen der Bedienperson häufig die Kompetenzen, überhaupt eine Entscheidung über das weitere Vorgehen treffen zu dürfen, so dass zunächst eine Abstimmung mit übergeordneten Stellen zu erfolgen hat, bevor beispielsweise die Produktion einer Linie gestoppt wird.

Häufig kommt es bei der Abstimmung zwischen den Bedienpersonen bzw. den übergeordneten Stellen zudem zu Missverständnissen, da nicht allen Personen dieselben Informationen in derselben Qualität zur Verfügung stehen. Es besteht somit ein Bedarf an einem Verfahren zum Betrieb eines industriellen Systems, das einen effizienteren Betrieb des Systems ermöglicht. WO2005/109122 beschreibt ein Verfahren zum Darstellen von Daten.

### Zusammenfassung der Erfindung

Demgegenüber wird erfindungsgemäß ein Verfahren zum Betrieb eines industriellen Systems nach Anspruch 1, ein industrielles System nach Anspruch 11 und ein Computerprogramm nach Anspruch 13 bereitgestellt.

Das Verfahren zum Betrieb eines industriellen Systems, wobei das System mindestens eine Linie umfasst, wobei jede Linie mindestens eine Maschine umfasst und wobei jede Maschine mindestens eine Komponente umfasst, weist die Schritte des Erfassens von Zustandsdaten von jeder Komponente, von jeder Maschine und jeder Linie, des Übermittels der Zustandsdaten an mindestens eine Benutzereinheit und das Darstellen der Zustandsdaten mittels der mindestens einen Benutzereinheit auf.

Während bisher die Zustandsdaten einer Maschine lediglich maschinenweit erfasst und auf einer spezifischen, der entsprechenden Maschine zugeordneten Benutzereinheit dargestellt werden, sieht das erfindungsgemäße Verfahren vor, die Zustandsdaten linienweit, bzw. bei mehreren Linien systemweit, zu erfassen und an mindestes eine, vorzugsweise mehrere oder sogar alle Benutzereinheiten zu übermitteln. Dadurch wird ein ortsunabhängiger Zugang zu den Zustandsdaten sämtlicher Linien, Maschinen und Komponenten ermöglicht, was die Grundlage für ein schnelles Überwachen und Entscheiden durch Bedienpersonen bildet.

Grundsätzlich ist vorgesehen, umfassende Zustandsdaten zu Linien, Maschinen und Komponenten bereitzustellen.

Um die Navigation innerhalb dieser Fülle von Zustandsdaten zu vereinfachen, ist vorgesehen, die Zustandsdaten in einer Baumstruktur zu ordnen, wobei die Zustandsdaten jeder Komponente der entsprechenden Maschine zugeordnet sind, die die jeweilige Komponente umfasst, und die Zustandsdaten jeder Maschine der entsprechenden Linie zugeordnet sind, die die jeweilige Maschine umfasst, und die Zustandsdaten jeder Linie nebengeordnet zu den Zustandsdaten jeder weiteren Linie sind.

Alternativ kann selbstverständlich auch vorgesehen werden, die Zustandsdaten jeder Linie dem Gesamtsystem zuzuordnen, das die Linien umfasst.

Insgesamt erfolgt die Navigation innerhalb der Baumstruktur somit auf drei Ebenen. Ebene 1 bildet dabei die Linien-Ebene, Ebene 2 bildet die der Linien-Ebene untergeordnete Maschinen-Ebene und Ebene 3 bildet die der Maschinen-Ebene untergeordnete Komponenten-Ebene.

Zunächst kann somit vorgesehen sein, eine Navigation folgend der logischen Struktur der Baumstruktur 3 bereitzustellen, d. h. bei Auswahl einer Linie stellen sich dem Benutzer auf der untergeordneten Maschinen-Ebene sämtliche Maschinen der Linie dar und bei darauffolgendem Auswahl einer bestimmten Maschine stellen sich dem Benutzer auf der Komponenten-Ebene sämtliche Komponenten der ausgewählten Maschine dar. Um die Navigation weiter zu vereinfachen, kann darüber hinaus vorgesehen sein, dass der Benutzer innerhalb einer Ebene navigieren kann, d. h. sich "horizontal" innerhalb der Baumstruktur bewegt.

So kann etwa vorgesehen sein, dass wenn ein Benutzer einen bestimmten Zustandparameter einer Maschine ausgewählt hat, er horizontal zu der nächsten Maschine der Linie springen kann und direkt der entsprechende Zustandsparameter dieser nächsten Maschine angezeigt wird, ohne dass er über die übergeordnete Linie-Ebene navigieren muss.

Des weiteren kann vorgesehen sein, die Zustandsdaten bestimmten Themengebieten zuzuordnen und so zu gruppieren. Abhängig vom Themengebiet und der Ebene der Baumstruktur, auf der sich der Benutzer innerhalb der Darstellung befindet, ergeben sich somit konkrete Zustandsdaten, die dem Benutzer angezeigt werden.

Beispielsweise kann einem Themengebiet "Übersicht" auf der Linien-Ebene eine Übersicht über die Maschinen der Linie mit einer Möglichkeit der Auswahl einer Maschinen und somit ein Zugang zu der Maschinen-Ebene bereitgestellt werden.

Entsprechend kann dann auf der Maschinen-Ebene eine Übersicht über die Komponenten der entsprechenden Maschine mit der Möglichkeit einer Auswahl einer spezifischen Komponente und somit ein Zugang zu der Komponenten-Ebene bereitgestellt werden.

Des weiteren kann ein Themengebiet "Programme" vorgesehen sein. Unter einem Programm ist entsprechend ein automatisierter Ablauf von Arbeitsschritten einer Maschine bzw. einer Komponente zu verstehen.

In einer Ausführungsform der Erfindung kann vorgesehen sein, dass das Verfahren den weiteren Schritt des Empfangens von Eingabedaten für eine bestimmte Komponente, eine bestimmte Maschine oder eine bestimmte Linie von jeder Benutzereinheit und den Schritt des Übermittelns der Eingabedaten an die jeweilige bestimmte Komponente, die jeweilige bestimmte Maschine oder die jeweilige bestimmte Linie aufweist.

Auf diese Weise wird nicht nur eine Möglichkeit der Überwachung der gesamten Linie bzw. sämtlicher Linien jeder Benutzereinheit bereitgestellt, sondern auch die Möglichkeit vorgesehen, von jeder Benutzereinheit aus jede Linie, Maschine oder Komponente zu steuern.

So kann etwa unter dem Themengebiet "Programme" auf Maschinen-Ebene eine Programmanwahl und ein Schrittbild der einzelnen Arbeitschritte dargestellt werden. Über die Programmanwahl kann ein Benutzer dann Funktionen wie etwa eine Leerfahrt, eine Testfahrt, das Ausleiten von Flaschen für Laborproben, ein Ausblasen, ein Reinigen, eine Bewegung der Servoachsen, oder eine Rückstellung der Maschine in ihre Grundstellung bewirken. Auf der Komponenten-Ebene wird dem Benutzer entsprechend ein Schrittbild der Komponenten mit einer Programmanwahl der komponentenbezogenen Funktionen, wie etwa ein Ausblasen oder Reinigen der Komponente bereitgestellt.

Des weiteren kann vorgesehen sein, dass einem Benutzer unter einem Themengebiet "Parameter" auf der Linien-Ebene grundlegende Parameter der Linie, wie etwa die Geschwindigkeit, etwa des Laufbandes, dargestellt werden. Auf der Maschinen-Ebene kann ebenfalls vorgesehen sein, dass Maschinenparameter wie etwa die Geschwindigkeit angezeigt werden. Des weiteren kann auf der Maschinen-Ebene vorgesehen sein, dass ein Benutzer die Maschinenleistung direkt beeinflussen kann, etwa durch das Einstellen von Geschwindigkeitsstufen, die bereits vorprogrammiert sein können. Auf der Komponenten-Ebene kann ebenfalls vorgesehen sein, dass veränderbare Parameter und/oder Sollwerte einer entsprechenden Komponente angezeigt und beeinflusst werden können.

Unter einem Themengebiet "Fließbild" kann auf der Maschinen-Ebene vorgesehen sein, dass ein Fließbild der entsprechenden Maschine dargestellt wird und auf der Komponenten-Ebene kann ein die entsprechende Komponente betreffender Ausschnitt des Maschinen-Fließbilds dargestellt werden.

Unter einem Themengebiet "Analogwerte" kann auf der Maschinen-Ebene und der Komponenten-Ebene vorgesehen sein, dass eine Übersicht über sämtliche Analogwerte der Maschine bzw. der Dokumente dargestellt wird.

Des weiteren kann unter einem Themengebiet "Nachrichten" vorgesehen sein, dass auf der Linien-Ebene Nachrichten angezeigt werden, die die entsprechende Linie betreffen. Entsprechend kann des weiteren vorgesehen sein, dass auf der Maschinen-Ebene und auf der Komponenten-Ebene Nachrichten angezeigt werden, die die entsprechende Maschine bzw. Komponente betreffen.

Unter einem Themengebiet "Sorte" kann vorgesehen sein, dass einem Benutzer auf der Linien-Ebene eine Ansicht über das momentan gefertigte Endprodukt bzw. bei der Linie einer Abfüllanlage des momentan abgefüllten Endprodukts dargestellt wird.

Es kann des weiteren vorgesehen sein, dass der Benutzer auf der Linien-Ebene die gewünschte abzufüllende Sorte einstellen kann, d. h. es kann ein Sortenmanagement bereitgestellt sein.

Auf der Maschinen-Ebene kann vorgesehen sein, dass dort eine gerade abgefüllte Sorte angezeigt wird und die abzufüllende Sorte geändert bzw. eingestellt werden kann. Des weiteren kann vorgesehen sein, dass ein Sorteneditor ausgewählt werden kann, in dem neue Sorten zur Auswahl auf der Maschinen-Ebene und/oder auf der Linien-Ebene erstellt werden können. Es kann auch vorgesehen sein, das eine Funktion zum Herunterladen von Sorten von einer weiteren Recheneinheit möglich ist.

Es kann vorgesehen sein, dass sich ein Benutzer zum Verwenden einer Benutzereinheit bei dieser anzumelden bzw. einzuloggen hat. Für jeden Benutzer ist ein bestimmtes Profil abgelegt, das verschiedene Daten über den Benutzer enthält. Zu diesen Daten können die Qualifikation des Benutzers, seine Position innerhalb des Unternehmens und seine Kompetenzen abgelegt sein, die festlegen, inwieweit der Benutzer auf die Linien, Maschinen und Komponenten einwirken kann.

Entsprechend kann vorgesehen sein, dass die Darstellung der Zustandsdaten abhängig von dem Profil des Benutzers erfolgt, d. h. bereits eine automatisierte Selektion bzw. Einschränkung der dargestellten Zustandsdaten erfolgt. Des weiteren kann der Typ der Eingabedaten profilabhängig eingeschränkt sein, d. h. der Benutzer kann nur bestimmte Eingaben abhängig von seiner spezifischen Kompetenz und Position vornehmen.

Entsprechend kann vorgesehen sein, dass unter einem Themengebiet "Personen" auf der Linien-Ebene eine Übersicht über alle der entsprechenden Linie zugeordneten Personen angezeigt wird. Entsprechend kann vorgesehen sein, dass auf der Maschinen-Ebene alle Personen bzw. Benutzer angezeigt werden, die sich an einer Benutzereinheit der Maschine eingeloggt haben oder durch sonstige Zuweisung der Maschine zugeordnet sind.

In einem Themengebiet "Wartung/Service" kann auf der Linien-Ebene eine Übersicht über vorzunehmende bzw. mögliche Wartungshandlungen gegeben werden bzw. eine Historie der bereits vorgenommenen Wartungshandlungen abgerufen werden. Auch auf der Maschinen-Ebene kann eine Wartungshistorie abrufbar sein oder aber auch vorbestimmte Wartungsintervalle, allgemeine technische Daten der Maschine oder ähnliches. Es kann auch vorgesehen sein, dass eine Eingabemöglichkeit vom Starten einer Wartungsroutine der entsprechenden Maschine gegeben ist.

Es kann des weiteren vorgesehen sein, dass die Benutzereinheiten untereinander kommunizieren können. Selbstverständlich kann auch vorgesehen sein, dass mittels einer Benutzereinheit Kontakt zu externen Stellen bzw. Firmen entweder über das Internet oder über herkömmliche Telefonverbindungen aufgenommen werden kann.

So kann dann auf der Maschinen-Ebene unter dem Themengebiet "Wartung/Service" direkt die Möglichkeit vorgesehen sein, Kontakt zu einem bestimmten Serviceteam oder einem bestimmten externen Unternehmen aufzunehmen und dieses zur Wartung der entsprechenden Maschine anzuweisen.

Auf der Komponenten-Ebene kann unter dem Themengebiet "Wartung/Service" ebenfalls vorgesehen sein, technische Spezifikationen bzw. Daten eines entsprechenden Aggregats abzurufen, ebenso wie die Wartungshistorie und vorgesehene Wartungsintervalle. Des weiteren können Informationen und Bestellmöglichkeiten für Ersatzteile der entsprechenden Komponente dargestellt werden.

Außerdem kann unter einem Themengebiet "Fehler" auf der Linien-Ebene eine Übersicht über aktuell vorhandene Fehler bzw. eine Historie zurückliegender Fehlermeldungen abrufbar sein. Auf der Maschinen-Ebene kann ebenfalls ein Zugang zu einer Historie der Fehlermeldungen abrufbar sein. Des weiteren kann vorgesehen sein, dass ein Grundriss der entsprechenden Maschine abrufbar ist. Selbstverständlich kann auch vorgesehen sein, die Fehlerursache für den Fehler bei der entsprechenden Maschine anzuzeigen sowie direkt die Möglichkeit gegeben sein, andere Benutzer anzuweisen, die Behebung des Fehlers vorzunehmen. Für diese wiederum kann vorgesehen sein, dass sie die Annahme des Fehlerbehebungsauftrags mittels ihrer Benutzereinheit auf der Maschinen-Ebene quittieren können.

Wie bereits voranstehend ausgeführt wurde, kann vorgesehen sein, dass einige dieser Anzeige bzw. Eingabemöglichkeiten, insbesondere das Anweisen anderer Benutzer zur Fehlerbehebung, nur Benutzern mit einem entsprechenden Profil zur Verfügung steht, beispielsweise Benutzern mit einer entsprechender Position innerhalb der Hierarchie des das gesamte System betreibenden Unternehmen.

Auch auf der Komponenten-Ebene kann in dem Themengebiet "Fehler" vorgesehen sein, dass die Fehlerursache angezeigt wird. Dabei kann ggf. vorgesehen sein, dass gleichzeitig ein Foto, eine Abbildung oder eine Skizze der fehlerbehafteten Komponente angezeigt wird. Auf der Komponenten-Ebene kann selbstverständlich vorgesehen sein, eine Historie der Fehlermeldungen wiederzugeben und es kann auch die Möglichkeit bereitgestellt sein, Anweisungen zur Fehlerbehebung zu geben bzw. zu quittieren.

Des weiteren kann vorgesehen sein, dass bestimmte Fehlermeldungen nur Benutzern mit einem bestimmten Profil dargestellt werden. So kann bereits automatisch eine Einschränkung dahingehend getroffen werden, dass Fehlermeldungen nur solche Benutzer erreichen, für die die Fehlermeldungen von Interesse bzw. relevant sind. In einer Ausführungsform ist die Anzeige von Fehlermeldungen so ausgestaltet, dass Fehlermeldungen grundsätzlich unabhängig von der momentanen Einschränkung der Darstellungen dargestellt werden. So können dann auch Fehlermeldungen einer Maschine dargestellt werden, selbst wenn momentan gerade eine andere Maschine mittels der Benutzereinheit dargestellt wird oder eine andere Linie oder eine nicht zu der fehlerbehafteten Maschine gehörende Komponente.

Da eventuell der Fall auftreten kann, dass mehrere Benutzer eine Eingabe für dieselbe Maschine, Linie oder Komponente treffen, um beispielsweise auf eine Fehlermeldung zu reagieren, kann vorgesehen sein, dass profilabhängig lediglich die Eingabedaten eines einzigen Benutzers übermittelt werden. So kann beispielsweise in dem Profil jedes Benutzers ein Wert für die Priorität seiner Eingabedaten abgelegt sein und im Konfliktfall nur die Eingabedaten des Benutzers mit dem höchsten Prioritätswert übermittelt werden.

Des weiteren kann grundsätzlich vorgesehen sein, dass die Einschränkung der Darstellung der Zustandsdaten und auch der Eingabedaten automatisch abhängig von der räumlichen Position der jeweiligen Benutzereinheit relativ zu der mindestens einen Linie, der mindestens einen Maschine und/oder der mindestens einen Komponente erfolgt.

Auf diese Weise kann die Navigation innerhalb der Baumstruktur automatisiert vorgenommen werden. Grundsätzlich können die Benutzereinheiten stationär vorgesehen sein, es sind aber auch mobile Terminals vorgesehen. Für die mobilen Benutzereinheiten bzw. Terminals kann ein Drahtlosnetzwerk in einem erfindungsgemäßen industriellen System vorgesehen sein, über das die Zustandsdaten bzw. die Eingabedaten übermittelt werden. Für das Drahtlosnetzwerk kann ein WLAN-Netzwerk oder aber auch ein Bluetooth-Netzwerk oder jede andere geeignete Datenübertragungsart gewählt werden.

Die räumliche Anordnung der mindestens einen Linie, der mindestens einen Maschine und der mindestens einen Komponente kann über feste Werte abgelegt sein oder aber mittels geeigneter Sender über mehrere Empfänger innerhalb des Drahtlosnetzwerk bestimmt werden. Grundsätzlich ist auch eine Positionsbestimmung per GPS denkbar.

Auf gleich Weise erfolgt eine Positionsbestimmung der mobilen Benutzereinheiten. Aus den jeweiligen Positionsdaten ist es dann möglich, die räumliche Position der Linien, Maschinen und Komponenten mit der Position der mobilen Benutzereinheit abzugleichen. Dieser Abgleich kann ggf. auf einer weiteren externen Recheneinheit stattfinden.

So kann dann vorgesehen sein, dass auf einer Benutzereinheit immer diejenige Linie, Maschine oder Komponente dargestellt wird, die sich räumlich am nächsten zu der Benutzereinheit befindet. So kann beispielsweise vermieden werden, dass ein Benutzer auf einem Wartungsrundgang ständig manuell die Darstellung ändern muss.

Grundsätzlich kann vorgesehen sein, dass die Benutzereinheit eine Einrichtung zum externen Darstellen aufweist. Beispielsweise kann vorgesehen sein, dass in einer mobilen Benutzereinheit ein Video-Beamer integriert ist, über den die momentane Darstellung an eine Wand oder andere ebene Fläche projiziert wird. Auf diese Weise könnten mehrere Personen einfach die Darstellung auf der mobilen Benutzereinheit betrachten.

Des weiteren kann vorgesehen sein, dass an einer mobilen Benutzereinheit aber auch an einer stationären Benutzereinheit die Navigation mittels Sprachwahl durchgeführt werden kann.

Außerdem kann vorgesehen sein, dass mittels einer mobilen Benutzereinheit Fotos etwa von einer beschädigten Maschine oder Komponente gemacht und versendet werden können.

Darüber hinaus kann vorgesehen sein, dass die mobile Benutzereinheit einen Barcodescanner oder allgemein einen Scanner für einen zweidimensionalen Code aufweist. An den Linien, Maschinen und Komponenten können dann entsprechende ein- oder zweidimensionale Codes angebracht sein, so dass die Navigation innerhalb der Darstellung durch Scannen des Codes mittels der mobilen Benutzereinheit erfolgt. Ferner können auch RFID-basierte Markierungen mittels eines entsprechenden/geeigneten Lese/Schreibsystems verwendet werden.

Letztlich kann vorgesehen sein, dass Bildschirmfotos von der Darstellung der stationären oder aber auch der mobilen Einheit angefertigt werden können.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einem erfindungsgemäßen industriellen System, ausgeführt wird.

Das Computerprogramm kann auf einem computerlesbaren Datenträger gespeichert sein.

Die vorliegende Beschreibung deckt auch ein Computerprogrammprodukt mit Programmcodemitteln ab, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einem erfindungsgemäßen Steuergerät, ausgeführt wird.

Weitere Vorteile und Ausgestaltungen der Erfindung ergeben sich aus der Beschreibung und der beiliegenden Zeichnung.

Die Erfindung ist anhand eines Ausführungsbeispieles in der Zeichnung schematisch dargestellt und wird im folgenden unter Bezugnahme auf die Zeichnung ausführlich beschrieben.

### Kurzbeschreibung der Zeichnung

Figur 1 zeigt eine abstrahierte Darstellung eines industriellen Systems.
Figur 2 zeigt ein Flussdiagramm, das die Navigation innerhalb der Darstellung des industriellen Systems in Figur 1 veranschaulicht.
Figur 3 zeigt ein Flussdiagramm, das die Darstellung einer Fehlermeldung veranschaulicht.
Figur 4 zeigt ein Flussdiagramm, das ausgeführt werden kann, wenn sich eine mobile Benutzereinheit einer stationären Benutzereinheit nähert.
Figur 5 zeigt ein Flussdiagramm, das die Kontrollübernahme über eine Linie, Maschine oder Komponente veranschaulicht.

### Ausführliche Beschreibung

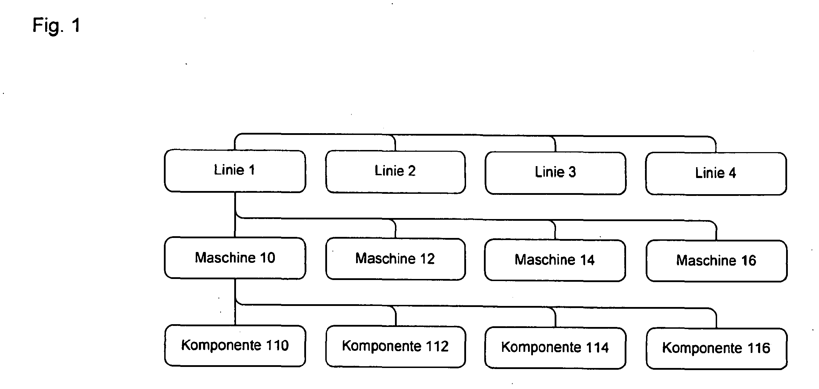

Figur 1 zeigt abstrahiert die Verknüpfungen innerhalb einer Darstellung eines industriellen Systems. Das industrielle System weist in der in Figur 1 dargestellten Ausführungsform vier Linien 1, 2, 3, 4 auf. Die Linie 1 wiederum umfasst vier Maschinen 10, 12, 14, 16. Etwa kann es sich bei der Linie 1 um eine Linie zum Abfüllen von Getränken in Flaschen handeln, wobei jede Maschine einen entsprechenden Arbeitsschritt innerhalb der Linie ausführt, etwa das Waschen und Ordnen der Flaschen, das Befüllen, das Verschließen der Flaschen und das Etikettieren der Flaschen.

Die Maschine 10 wiederum umfasst vier Komponenten 110, 112, 114, 116.

Selbstverständlich umfassen auch die Linien 2, 3, 4 und die Maschinen 12, 14, 16 jeweils mehrere Maschinen bzw. Komponenten, diese sind aus Übersichtsgründen jedoch nicht dargestellt.

Die Darstellung ist in einer Baumstruktur der Zustandsdaten geordnet. Erfindungsgemäß werden zudem nicht nur die Zustandsdaten für eine bestimmte Maschine dargestellt, sondern vielmehr die Zustandsdaten sämtlicher Maschinen aller Linien dargestellt. Somit ist es möglich, innerhalb der Darstellung zwischen den jeweiligen Linien 1, 2, 3, 4 zu wechseln und innerhalb der Linien 1, 2, 3, 4 zu navigieren. Auf diese Weise sind auf einer Benutzereinheit sämtliche Daten des industriellen Systems abrufbar.

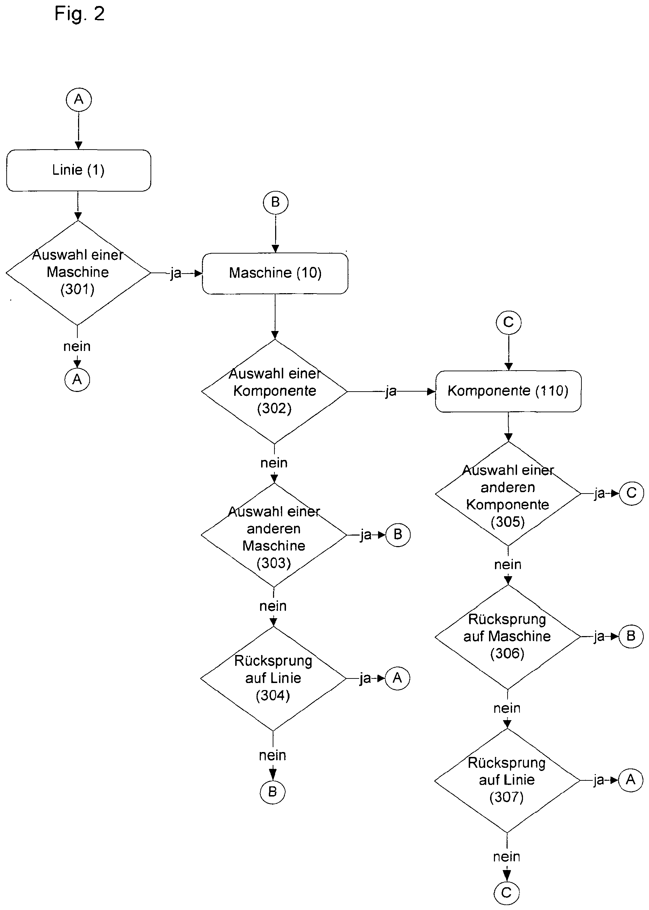

Figur 2 zeigt ein Flussdiagramm, das eine mögliche Navigation innerhalb der Darstellung veranschaulicht.

Ausgehend vom Startpunkt A wird zunächst eine Linie 1 ausgewählt. Grundsätzlich ist selbstverständlich möglich auch eine der anderen Linien 2, 3, 4 auszuwählen und innerhalb einer Linien-Ebene zwischen den verschiedenen Linien zu springen.

Innerhalb der Linie 1 besteht die Möglichkeit in einem Schritt 301 eine spezifische Maschine der Linie 1 auszuwählen. Findet keine Auswahl statt, verbleibt die Darstellung unverändert, findet eine Auswahl statt, z. B. die der Maschine 10, wird die Darstellung auf die Maschine 10 eingeschränkt.

Hier besteht nun die Möglichkeit, in einem Schritt 302 eine Komponente der Maschine 10 auszuwählen. Findet keine solche Auswahl statt, kann in einem Schritt 303 eine andere Maschine ausgewählt werden. Auf diese Weise ist es auch möglich, sich horizontal innerhalb der Maschinen-Ebene zu bewegen, ohne die Navigation über den Umweg der übergeordneten Linien-Ebene auszuführen. Wird eine andere Maschine ausgewählt, beginnt die Abfrage von Punkt B aus erneut.

Wird keine andere Maschine ausgewählt, besteht die Möglichkeit, in einem Schritt 304 zurück auf die übergeordnete Linien-Ebene zu springen, woraufhin die Abfrage an Punkt A erneut beginnt.

Wird keine Auswahl getroffen, verbleibt die Darstellung unverändert. Die Abfrage beginnt an Punkt B erneut.

Wird in Schritt 302 eine Komponente 110 ausgewählt, die der Maschine 10 untergeordnet ist, springt die Darstellung auf die Komponenten-Ebene.

Grundsätzlich kann hier eine andere Komponente in einem Schritt 305 ausgewählt werden, so dass auch ein horizontales Bewegen auf der Komponenten-Ebene möglich ist, ohne einen Umweg über die Maschinen-Ebene und die Linien-Ebene nehmen zu müssen.

Wird keine Auswahl im Schritt 305 getroffen, kann in einem Schritt 306 zurück auf die Maschinen-Ebene gesprungen werden. Wird diese Auswahl getroffen, wird die Abfrage an Punkt B für die jeweilige Maschine 10, die die Komponente 110 umfasst, fortgeführt.

Wird keine Auswahl in Schritt 306 getroffen, kann in Schritt 307 direkt auf die Linien-Ebene zurück in die Linie 1 gesprungen werden, die die Maschine 10 umfasst, die die Komponente 110 umfasst. Die Abfrage wird dann an Punkt A fortgesetzt.

Wird auch diese Auswahl nicht vorgenommen, wird die Abfrage an Punkt C fortgesetzt und die Darstellung verbleibt unverändert.

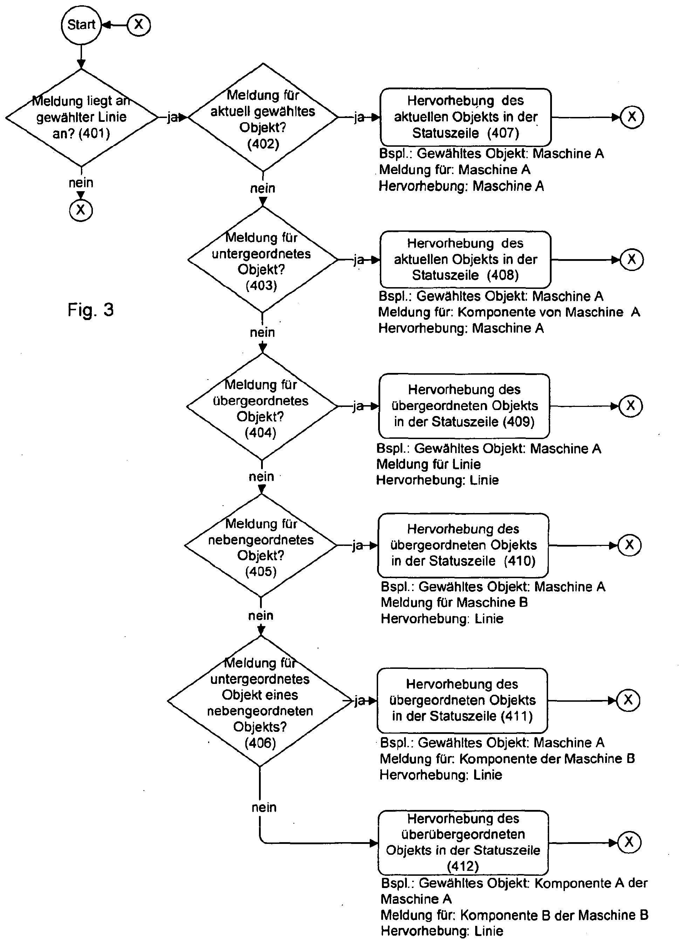

Figur 3 zeigt ein Flussdiagramm, das einen bevorzugten Umgang mit Fehlermeldungen innerhalb der Darstellung veranschaulicht.

Wird eine Fehlermeldung am Punkt X in die Benutzereinheit eingegeben, wird in Schritt 401 zunächst bestimmt, ob die Fehlermeldung die momentan zur Darstellung ausgewählte Linie betrifft. Ist die gewählte Linie nicht betroffen, so wird nichts unternommen und die Abfrage startet erneut.

Selbstverständlich kann in einer abgewandelten Ausführungsform jedoch auch vorgesehen sein, dass anstatt die Fehlermeldung zu ignorieren, eine Hervorhebung in der Darstellung erfolgt, dass eine andere Linie von einer Fehlermeldung betroffen ist.

Ist die ausgewählte Linie betroffen, wird in den Schritten 402, 403, 404, 405 und 406 bestimmt, ob die Meldung ein aktuell ausgewähltes Objekt, d. h. die aktuell ausgewählte Maschine oder Komponente, betrifft oder aber ein untergeordnetes, übergeordnetes, nebengeordnetes oder ein untergeordnetes Objekt eines nebengeordneten Objekts betrifft.

Daher ist in der Darstellung eine Statuszeile vorgesehen, die die momentane Position in der Baumstruktur der Darstellung verdeutlicht. Dabei wird in der Statuszeile mittels eines Icons die momentan gewählte Linie, mittels eines weiteren Icons die momentan gewählte Maschine und mittels eines dritten Icons die momentan gewählte Komponente dargestellt. Befindet man sich auf der Linien-Ebene ist entsprechend ein Linienicon abgebildet. Wählt man nun eine bestimmt Maschine aus, wird neben dem entsprechenden Linienicon ein Icon für die ausgewählte Maschine angezeigt. Wählt man nun noch eine Komponente aus, tritt ein drittes Icon hinzu, das die ausgewählte Komponente darstellt.

Über diese Icons ist eine Navigation innerhalb der Darstellung möglich. So kann beispielsweise durch Auswählen des entsprechenden Linienicons zurück in die Linien-Ebene gesprungen werden. Es kann beispielweise vorgesehen sein, dass die Benutzereinheit einen Touchscreen aufweist, der eine einfache Auswahl der Icons ermöglicht.

Nachdem in den Schritten 402, 403, 404, 405 und 406 bestimmt worden ist, welches Objekt, d. h. welche Maschine bzw. Komponente, von der Fehlermeldung betroffen ist, erfolgt eine in entsprechende Hervorhebung eines Icons in der Statuszeile entsprechenden Schritten 407, 408, 409, 410, 411 und 412. Wählt man dann ein entsprechend vorgehobenes Icon an, ändert sich auch die entsprechende Hervorhebung. Somit kann ein Benutzer lediglich den Hervorhebungen bei seine Anwahl folgen, um innerhalb der Baumstruktur zu den mit einer Fehlermeldung behafteten Objekt, d. h. Maschine oder Komponente, zu gelangen.

Der Benutzer muss sich somit nicht selbst innerhalb der Baumstruktur orientieren, was eine sichere Navigation, insbesondere in Stresssituationen, ermöglicht.

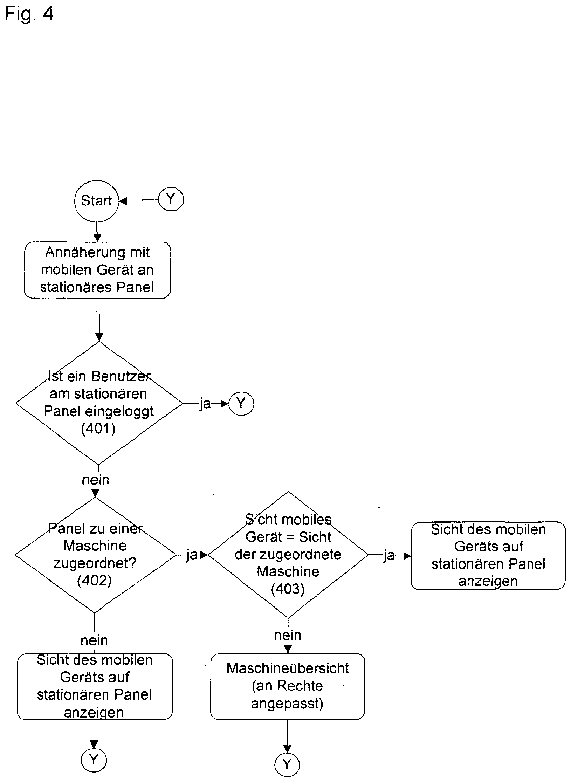

Figur 4 zeigt ein Flussdiagramm, das eine mögliche Lösung für eine Konfliktsituation darstellt, in der sich ein Benutzer mit einer mobilen Benutzereinheit einer Maschine annähert, die zusätzlich eine stationäre Bedienungseinheit aufweist.

Für eine stationäre Benutzereinheit wird dabei auch der Begriff Panel verwendet.

Nähert sich ein Benutzer einer mobilen Benutzereinheit einer Maschine mit einem Panel an, kann in einem Schritt 401 festgestellt werden, ob bereits ein Benutzer das Panel zur Überwachung und Steuerung der entsprechenden Maschine verwendet. Ist dies der Fall, ist vorgesehen, dass keine Übernahme des Panels und der Maschinenkontrollfunktionen erfolgt.

Selbstverständlich kann alternativ vorgesehen sein, dass die Benutzerprofile abgeglichen werden und dem Benutzer, der im Rahmen seines Profils eine höhere Priorität eingeräumt ist, die Kontrolle über das Panel und die Maschine übergeben wird.

Ist kein Benutzer am Panel eingeloggt, kann im Schritt 402 überprüft werden, ob das Panel dauerhaft einer bestimmten Maschine zugeordnet ist. Ist dies nicht der Fall, wird die momentane Darstellung der Mobilbenutzereinheit auf dem Panel angezeigt. Der Benutzer kann so das Panel verwenden, das in der Regel größere und komfortablere Anzeige- und Bedienelemente aufweist.

Ist das Panel einer bestimmten Maschine fest zugeordnet, wird in einem Schritt 403 überprüft, ob die auf der mobilen Benutzereinheit momentan ausgewählte Maschine der fest zugeordneten Maschine entspricht. Ist dies der Fall, wird die momentane Darstellung der mobilen Benutzereinheit auf dem Panel angezeigt und der Benutzer kann wiederum das Panel mit seinen komfortableren Bedienelementen zur weiteren Bedienung verwenden. Ist dies nicht der Fall, wird auf dem Panel eine Übersicht über die Maschine angezeigt, die automatisch an das Profil des Benutzers angepasst ist, so dass der Benutzer nur diejenigen Zustandsdaten abrufen kann und Eingabedaten eingeben kann, die ihm über sein Profil zugewiesen sind.

Auf diese Weise wird komfortabel eine automatisierte Bedienungsübernahme von stationären Benutzereinheiten realisiert, wenn sich ein Benutzer mit einer mobilen Benutzereinheit innerhalb des industriellen Systems bewegt und er sich der stationären Benutzereinheit annähert.

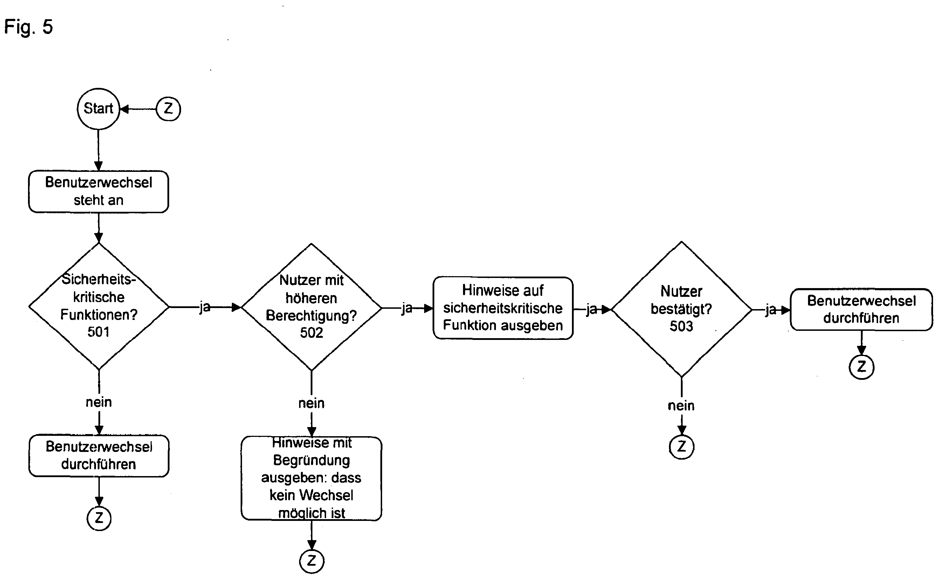

Figur 5 zeigt ein Flussdiagramm, das eine Möglichkeit veranschaulicht, wie mit dem Konfliktfall umgegangen werden kann, in dem zwei Benutzer auf dasselbe Objekt, d. h. Komponente oder Maschine, zugreifen wollen.

Zunächst wird festgestellt, dass mehrere Benutzer auf dieselbe Maschine bzw. Komponente zugreifen wollen. Dabei liegt die Situation vor, dass ein erster Benutzer mit einem ersten Benutzerprofil bereits auf die Maschine bzw. Komponente zugreift und nun ein zweiter Benutzer mit einem zweiten Profil ebenfalls auf die Maschine bzw. Komponente zugreifen will.

In Schritt 501 wird festgestellt, ob es sich bei der Eingabe des zweiten Benutzers um eine sicherheitskritische Funktion handelt, beispielsweise das Stoppen einer Maschine aufgrund einer Fehlermeldung.

Ist dies nicht der Fall, wird ein Benutzerwechsel durchgeführt.

Selbstverständlich kann auch hier ergänzend vorgesehen sein, dass der Benutzerwechsel trotz allem abhängig von den Profilen des ersten Benutzers und des zweiten Benutzers abgelehnt wird.

Handelt es sich um eine sicherheitskritische Funktion, so wird in einem Schritt 502 festgestellt, welcher Benutzer eine höhere Berechtigung bzw. Priorität aufweist. Diese Werte sind in dem jeweiligen Benutzerprofil abgelegt. Hat der zweite Benutzer eine niedrigere Berechtigung bzw. Priorität, wird der Wechsel abgelehnt, und die Eingabe des zweiten Benutzers ignoriert.

Weist der zweite Benutzer eine höher Berechtigung bzw. Priorität auf, hat er als weitere Sicherheitsstufe in Schritt 503 zu bestätigen, dass er eine sicherheitskritische Eingabe ausführen will.

Bestätigt er dies nicht, wird kein Benutzerwechsel ausgeführt, und die Eingabe des zweiten Benutzers wird ignoriert. Bestätigt er auch diesen Sicherheitsschritt 503, wird der Benutzerwechsel ausgeführt und die Eingabe des zweiten Benutzers ausgeführt. Der zweite Benutzer ist nun in die entsprechende Maschine eingeloggt und hat die alleinige Kontrolle über die Maschine.

Auf diese Weise wird einfach sichergestellt, dass in einem sicherheitskritischen Fall, insbesondere wenn mehrere Benutzer mit mobilen Benutzereinheiten eine Fehlermeldung erhalten und diese beheben wollen, nur die Eingabe des Benutzers mit der für diesen Fall höchsten Priorität bzw. Berechtigung ausgeführt wird.

Sämtliche voranstehenden Beispiele wurden für ein industrielles System ausgeführt, das die drei Ebenen Linie, Maschine und Komponente aufweist.

Selbstverständlich ist die Erfindung auch für ein industrielles System mit weniger oder mehr als drei Ebenen verwendbar. Insbesondere ist die vorliegende Erfindung auch auf andere Anwendungen als Abfüllanlagen für Getränke anwendbar.

## Patentansprüche

1. Verfahren zum Betrieb eines industriellen Systems, wobei das System mindestens eine Linie (1, 2, 3, 4) umfasst, wobei jede Linie (1, 2, 3, 4) mindestens eine Maschine (10, 12, 14, 16) umfasst und wobei jede Maschine (10, 12, 14, 16) mindestens eine Komponente (110, 112, 114, 116) umfasst, mit den folgenden Schritten.
- Erfassen von Zustandsdaten von jeder Komponente (110, 112, 114, 116), von Jeder Maschine (10, 12, 14, 16) und von jeder Linie (1, 2, 3, 4),
- Übermitteln der Zustandsdaten an mindestens eine Benutzereinheit,
- Darstellen der Zustandsdaten mittels der mindestens einen Benutzereinheit,
**dadurch gekennzeichnet dass**: jeder Benutzereinheit ein Benutzer mit einem bestimmten Profil zugeordnet Ist und die Darstellung der Zustandsdaten profilabhängig erfolgt, wobei für jeden Benutzer ein bestimmtes Profil abgelegt ist, das verschiedene Daten über den Benutzer enthält, die festlegen, inwieweit der Benutzer auf die Linien, Maschinen und Komponenten einwirken kann.

2. Verfahren nach Anspruch 1, bei dem die Zustandsdaten in einer Baumstruktur geordnet sind, wobei die Zustandsdaten jeder Komponente (110, 112, 114, 116) der entsprechenden Maschine (10, 12, 14, 16) zugeordnet sind, die die Jeweilige Komponente (110, 112, 114, 116) umfasst, und die Zustandsdaten jeder Maschine (10, 12, 14, 16) der entsprechenden Linie (1, 2, 3, 4) zugeordnet sind, die die jeweilige Maschine (10, 12, 14, 16) umfasst, und die Zustandsdaten jeder Linie (1, 2, 3, 4) nebengeordnet zu den Zustandsdaten jeder weiteren Linie (1, 2, 3, 4) sind.

3. Verfahren nach Anspruch 1 oder 2, bel dem die Darstellung der Zustandsdaten auf eine ausgewählte Linie (1, 2, 3, 4), eine ausgewählte Maschine (10, 12, 14, 16) oder eine ausgewählte Komponente (110, 112, 114, 116) eingeschränkt werden kann.

4. Verfahren nach Anspruch 3, bei dem die Einschränkung der Darstellung der Zustandsdaten automatisch abhängig von der räumlichen Position der jeweiligen Benutzereinheit relativ zu der mindestens einen Linie (1, 2, 3, 4), der mindestens elnen Maschine (10, 12, 14, 16) und/oder der mindestens einen Komponente (110, 112, 114, 116) erfolgt.

5. Verfahren nach einem der Ansprüche 1 bis 4, des weiteren mit folgenden Schritten:
- Empfangen von Eingabedaten für eine bestimmte Komponente (110, 112, 114, 116), eine bestimmte Maschine (10, 12, 14, 16) oder eine bestimmte Linie (1, 2, 3, 4) von jeder Benutzereinheit,
- Übermitteln der Eingabedaten an die jeweilige bestimmte Komponente (110, 112, 114, 116), die jeweilige bestimmte Maschine (10, 12, 14, 16) oder die jeweilige bestimmte Linie (1, 2, 3, 4).

6. Verfahren nach Anspruch 5, bei dem jeder Benutzereinheit ein Benutzer mit einem bestimmten Profil zugeordnet Ist und an die jeweilige bestimmte Komponente (110. 112, 114, 116), die jeweilige bestimmte Maschine (10, 12, 14, 16) oder die jeweilige bestimmte Linie (1, 2, 3, 4) profilabhängig lediglich die Eingabedaten eines einzigen Benutzers übermittelt werden.

7. Verfahren nach Anspruch 6, bei dem der Typ der Eingabedaten profilabhänglg eingeschränkt ist.

8. Verfahren nach einem der voranstehenden Ansprüche, bei dem die Benutzenainhalten untereinander kommunizieren können.

9. Verfahren nach einem der Ansprüche 3 bis 8, bei dem die Zustandsdaten Fehlermeldungen umfassen, die unabhängig von der Einschränkung der Darstellung mittels der Benutzereinheit dargestellt werden.

10. Verfahren nach Anspruch 9, bei dem jeder Benutzereinheit ein Benutzer mit einem bestimmten Profil zugeordnet ist und die Darstellung der Fehlermeldungen profilabhangig erfolgt.

11. Industrielles System zur Durchführung eines Verfahrens nach einem der Ansprüche 1 bis 10, bei dem mindestens eine der mindestens einen Benutzereinheit eine mobile Benutzereinheit ist und ein Drahtlosnetzwerk zum Übermitteln der Zustandsdaten bzw. der Eingabedaten vorgesehen Ist.

12. Industrielles System nach Anspruch 11, bel dem die mindestens eine mobile Benutzereinheit eine Einrichtung zum externen Darstellen aufweist.

13. Computerprogramm mit Programmcodemitteln, um alle Schritte eines Verfahrens nach einem der Ansprüche 1 bis 10 durchzuführen, wenn das Computerprogramm auf einem Computer oder einer entsprechenden Recheneinheit ausgeführt wird.

14. Computerprogramm nach Anspruch 13, das auf einem computerlesbaren Datenträger gespeichert ist.

## Claims

1. Method for operating an industrial system, wherein the system comprises at least one line (1, 2, 3, 4), wherein each line (1, 2, 3, 4) comprises at least one machine (10, 12, 14, 16), and wherein each machine (10, 12, 14, 16) comprises at least one component (110, 112, 114, 116), with the following steps:
- Detecting state data of each component (110, 112, 114, 116), of each machine (10, 12, 14, 16), and of each line (1, 2, 3, 4),
- transmitting the state data to at least one user unit,
- displaying the state data by means of the at least one user unit,
**characterised in that**:
assigned to each user unit is a user with a specific profile, and the display of the state data takes place as profile-dependent, wherein for each user a specific profile is stored, which contains different data relating to the user, which specifies to what extent the user can exert effect on the lines, machines, and components.

2. Method according to claim 1, in which the state data is arranged in a tree structure, wherein the state data of each component (110, 112, 114, 116) is allocated to the corresponding machine (10, 12, 14, 16) which comprises the respective components (110, 112, 114, 116), and the state data of each machine (10, 12, 14, 16) is allocated to the corresponding line (1, 2, 3, 4) which comprises the respective machine (10, 12, 14, 16), and the state data of each line (1, 2, 3, 4) are of equal status to the state data of each further line (1, 2, 3, 4).

3. Method according to claim 1 or 2, in which the representation of the state data can be restricted to a selected line (1, 2, 3, 4), a selected machine (10, 12, 14, 16), or a selected component (110, 112, 114, 116).

4. Method according to claim 3, in which the restriction of the representation of the state data is effected automatically depending on the spatial position of the respective user unit relative to the at least one line (1, 2, 3, 4) of the at least one machine (10, 12, 14, 16) and/or of the at least one component (110, 112, 114, 116).

5. Method according to any one of claims 1 to 4, with the following further steps:
- receiving input data for a specific component (110, 112, 114, 116), a specific machine (10, 12, 14, 16), or a specific line (1, 2, 3, 4) by each user unit,
- transmitting the input data to the respective component (110, 112, 114, 116), the respective specific machine (10, 12, 14, 16), or the respective specific line (1, 2, 3, 4).

6. Method according to claim 5, in which allocated to each user unit is a user with a specific profile, and, depending on the profile, only the input data of one single user is transmitted to the respective component (110, 112, 114, 116), the respective specific machine (10, 12, 14, 16), or the respective specific line (1, 2, 3, 4).

7. Method according to claim 6, in which the type of the input data is restricted depending on the profile.

8. Method according to any one of the preceding claims, in which the user units can communicate with one another.

9. Method according to any one of claims 3 to 8, in which the state data comprises fault messages, which are represented regardless of the restriction on the representation, by means of the user unit.

10. Method according to claim 9, in which allocated to each user unit is a user with a specific profile, and the representation of fault messages takes place as profile-dependent.

11. Industrial system for carrying out a method according to any one of claims 1 to 10, in which one of the at least one user unit is a mobile user unit, and a wireless network is provided for transmitting the state data or input data.

12. Industrial system according to claim 11, in which the at least one mobile user unit comprises a device for external representation display.

13. Computer program with program code means in order to carry out all the steps of a method according to any one of claims 1 to 10, when the computer program is run on a computer or a corresponding computing unit.

14. Computer program according to claim 13, which is stored on a computer-readable data carrier.

## Revendications

1. Procédé servant à faire fonctionner un système industriel, dans lequel le système comprend au moins une ligne (1, 2, 3, 4), dans lequel chaque ligne (1, 2, 3, 4) comprend au moins une machine (10, 12, 14, 16) et dans lequel chaque machine (10, 12, 14, 16) comprend au moins un composant (110, 112, 114, 116), avec les étapes de :
- détection de données d'état de chaque composant (110, 112, 114, 116), de chaque machine (10, 12, 14, 16) et de chaque ligne (1, 2, 3, 4) ;
- transmission des données d'état à au moins une unité utilisateur ;
- représentation des données d'état au moyen de l'au moins une unité utilisateur,
**caractérisé en ce que**
un utilisateur est associé à chaque unité utilisateur avec un profil défini et la représentation des données d'état est effectuée en fonction du profil, dans lequel pour chaque utilisateur un profil défini est enregistré, qui contient différentes données concernant l'utilisateur, qui fixent dans quelle mesure l'utilisateur peut agir sur les lignes, les machines et les composants.

2. Procédé selon la revendication 1, où les données d'état sont classées en une structure d'arbre, dans lequel les données d'état de chaque composant (110, 112, 114, 116) sont associées à la machine (10, 12, 14, 16) correspondante, qui comprend le composant (110, 112, 114, 116) respectif, et les données d'état sont associées à chaque machine (10, 12, 14, 16) de la ligne (1, 2, 3, 4) correspondante, qui comprend la machine (10, 12, 14, 16) respective, et les données d'état de chaque ligne (1, 2, 3, 4) sont classées au même niveau par rapport aux données d'état de chaque autre ligne (1, 2, 3, 4).

3. Procédé selon la revendication 1 ou 2, où la représentation des données d'état peut être restreinte à une ligne (1, 2, 3, 4) sélectionnée, une machine (10, 12, 14, 16) sélectionnée ou un composant (110, 112, 114, 116) sélectionné.

4. Procédé selon la revendication 3, où la restriction de la représentation des données d'état est effectuée automatiquement en fonction de la position spatiale de l'unité utilisateur respective par rapport à l'au moins une ligne (1, 2, 3, 4), l'au moins une machine (10, 12, 14, 16) et/ou l'au moins un composant (110, 112, 114, 116).

5. Procédé selon l'une quelconque des revendications 1 à 4 avec les étapes de :
- réception de données d'entrée pour un composant (110, 112, 114, 116) défini, une machine (10, 12, 14, 16) définie ou une ligne (1, 2, 3, 4) définie de chaque unité utilisateur,
- transmission des données d'entrée au composant (110, 112, 114, 116) défini respectif, la machine (10, 12, 14, 16) définie respective ou la ligne (1, 2, 3, 4) définie respective.

6. Procédé selon la revendication 5, où un utilisateur avec un profil défini est associé à chaque unité utilisateur et seulement les données d'entrée d'un utilisateur unique sont transmises au composant (110, 112, 114, 116) défini respectif, la machine (10, 12, 14, 16) définie respective ou la ligne (1, 2, 3, 4) définie respective en fonction du profil.

7. Procédé selon la revendication 6, où le type des données d'entrée est restreint en fonction du profil.

8. Procédé selon l'une quelconque des revendications précédentes, où les unités utilisateurs peuvent communiquer entre elles.

9. Procédé selon l'une quelconque des revendications 3 à 8, où les données d'état comprennent des messages d'erreur, qui sont représentés indépendamment de la restriction de la représentation au moyen de l'unité utilisateur.

10. Procédé selon la revendication 9, où un utilisateur avec un profil défini est associé à chaque unité utilisateur et la représentation des messages d'erreur est effectuée en fonction du profil.

11. Système industriel servant à mettre en œuvre un procédé selon l'une quelconque des revendications 1 à 10, où au moins une des au moins une unité utilisateur est une unité utilisateur mobile et un réseau sans fil est prévu pour transmettre les données d'état ou les données d'entrée.

12. Système industriel selon la revendication 11, où l'au moins une unité utilisateur mobile présente un système de représentation externe.

13. Programme informatique avec des moyens de code de programme pour mettre en œuvre toutes les étapes d'un procédé selon l'une quelconque des revendications 1 à 10 quand le programme informatique est exécuté sur un ordinateur ou une unité de calcul correspondante.

14. Programme informatique selon la revendication 13, qui est mémorisé sur un support de données lisible par ordinateur.
